# EUROPEAN PATENT SPECIFICATION

(11) **EP 1 477 061 B1**
(45) Date of publication and mention of the grant of the patent: **20.08.2008**
(21) Application number: 04380097.8
(22) Date of filing: 28.04.2004
(51) Int. Cl.: A01M 1/08, A01M 1/06, A01M 1/04

(54) **Insect suction apparatus**
Saugvorrichtung für Insekten
Appareil d'aspiration pour les insectes

(30) Priority: 16.05.2003 ES 200301182 U
(43) Date of publication of application: 17.11.2004
(73) Proprietor: Moreno Martinez, Miguel, 08320 El Masnou (Barcelona) (ES); Vives i Suné, Juan Maria, 08320 El Masnou (Barcelona) (ES)
(72) Inventor: Moreno Martinez, Miguel, 08320 El Masnou (Barcelona) (ES); Vives i Suné, Juan Maria, 08320 El Masnou (Barcelona) (ES)
(74) Representative: Durán Moya, Carlos

(56) References cited:
- WO-A-03/007709
- DE-C- 522 094
- DE-U- 20 010 275
- GB-A- 662 897
- GB-A- 1 119 478
- US-A- 3 058 257
- US-A- 5 123 201
- US-A1- 2001 045 051

## Description

The present invention refers to an insect suction apparatus which comprises an item of electrical/electronic equipment for eliminating, by means of attraction and suction, any type of predatory insect, such as dipterous insects, "flies and mosquitoes", some hymenoptera, "bees and wasps", and also nocturnal lepidoptera, "moths".

The apparatus of the present invention comprises four active phases or sectors: attraction, detection or location, suction and elimination, with two optional methods, detection and timing.

The apparatus is intended mainly for use in homes, hotels, hospitals, food outlets and generally the interior and exterior of any space where it is wished to eliminate insects. It will function more effectively in nocturnal use.

WO-A-03/007709 discloses an apparatus according to the precharacterising part of claim 1. Sanitary conditions, smoothing at functioning, attraction capacity and maintenance are imposed by the apparatus according to claim 1.

To attract the insects, two complementary elements such as smell and light are used. Smell is the principal element of attraction by which the insects detect the apparatus and, once located, it will be that same smell in conjunction with the effect of the light which will have the task of directing the insect to the suction inlet. The odoriferous elements may be of various types, based in some cases on artificial pheromones.

The lighting elements used in the apparatus are diodes, high luminosity LEDs, the main characteristic of which is their low consumption and unlimited life.

A line of white LEDs strategically placed inside the suction inlet and covered by a glass with prism functions allows sufficient luminosity to be provided to effect the attraction of the insects towards the inside of the apparatus.

The luminosity emitted by the LEDs is reflected onto the inner cavity of the suction inlet, painted or made of material light in colour. The placing of reflective material in the inner cavity of the suction inlet will be possible in order to increase the brightness.

The minuscule size of some insects such as mosquitoes, or the movement of any of them necessitates the use of a complementary system, that is to say, the absence of detection should not hinder suction. In order to prevent the non-detection of the insects, this apparatus will have a presence detector and a variable timer.

The detection of presence as movement and proximity will be carried out by means of known technology by PIR (basic infrared) sensors of infrared radiation which detect the movement produced by persons or other living beings within an area, the detector measuring the ambient temperature and detecting an abrupt change which occurs on a warmer body which again corresponds to a person or other type of living being. Once the insect is detected, the equipment will carry out a suction action for a period of no more than three seconds with a suction capacity corresponding to a column of 1,400 mm water. The angle of detection will be the diameter of the dome.

The electrical PIR infrared sensor combines a glass and a filter which produces an electrical change arranged for infrared radiation. Some ferro-electrical materials spontaneously develop a change when the temperature of the materials varies. Some changes of the incidence of the radiation may change the temperature of the crystalline material. This material is affected by a wide range of radiation, which is associated with the radiation of the human body. There are two sensor zones in the device which cancels out the signals caused by the ambient conditions similar to the temperature of the light in the room. An element which passes in front of the sensor actuates first one element and then the other.

The apparatus will be equipped with a timer which can be adjusted by the user, making it possible to vary the time in which the equipment will carry out a suction cycle. The same applies in the case of detection. Suction will never be for more than three seconds, with a capacity corresponding to a 1,400 mm column of water.

The suction aperture will be located within the suction inlet, being conical in shape and at its lower, narrower end, a non-return diaphragm will be installed which will prevent the insects from being able to return to the surface through the suction pipe.

Suction will be effected by the setting in operation of a rapid start suction motor of variable power which may customarily be of about 350 watts, being suited with regard to noise and rotation. The suction of the insects will terminate in a bag impregnated with insecticide for final retention thereof.

The insecticide will have a specific permanence of use of a maximum of some two months, once the bag is opened and placed in the apparatus.

For greater understanding, some drawings corresponding to a preferred embodiment of the present invention are appended by way of non-limiting example.

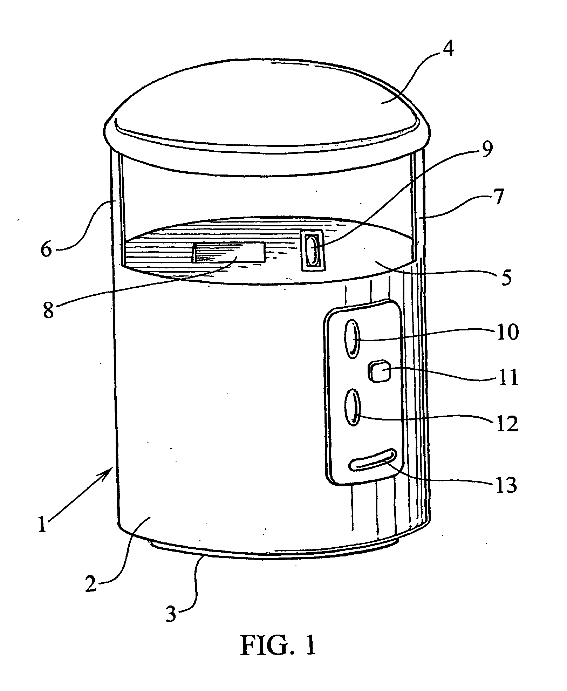

Figure 1 shows an external view of the apparatus of the present invention.

Figure 2 shows a perspective view with the dome disassembled and with the internal devices of the apparatus represented by dashed lines.

Figure 3 shows diagrammatically a plan view of the dome of the apparatus.

Figure 4 shows a simplified view of an electrical/electronic system incorporated in the apparatus.

As may be observed in the figures, the apparatus 1 comprises a body 2 of generally cylindrical or other shape, intended to bear on a support floor by means of its base 3 and which is closed at the top by a dome 4, arranged at a certain distance from the upper base 5 of the apparatus by means of supports, 6 and 7, variable in number and shape. In said upper base 5 are incorporated the suction inlet 8 and the infrared device 9. On the body 2 of the apparatus is arranged a plate carrying the control and service devices of the apparatus, constituted basically by an optical indicator for the filling of the bags 10, a control 11 for regulating the time, a viewing window 12 for checking the connected state, and another 13 of variable application.

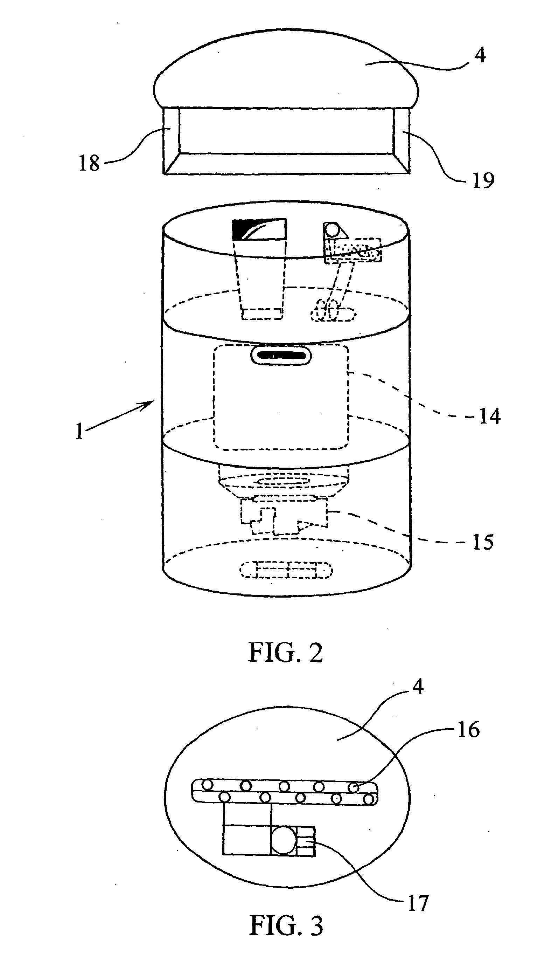

In Figure 2 the body 1 can be seen diagrammatically in more detail, and basically contains the base anchorage of mechanisms, the bag with insecticide and the suction body with motor. They are represented in the figure by the number 14 for the bag with insecticide, and 15 for the rapid start motor 15. The collecting bag will be impregnated with an insecticide.

The rapid start motor 15 is controlled by a sudden start relay which has on the card an optocoupler for avoiding consumption and starting always at zero, and a diode which prevents possible peaks, avoiding possible false sudden starts of the relay.

The dome 4 is shown diagrammatically in Figure 3, and a series of high luminosity LEDs 16 and the chemical attraction support 17 with a central tablet can be observed therein. All this constitutes the upper attraction system.

The dome 4 is connected by means of supports 18 and 19, variable in number, to the body of the machine, the cabling which feeds the LEDs and the support of the chemical attraction device passing through said supports. The interior of the dome will be made of a reflective material in the form of a prism in order to increase the luminosity.

The system of high luminosity LEDs will comprise two series thereof in parallel, with a number of four to six per series.

The attraction support will be heated by a small resistance, not shown, which will slowly bring about the evaporation of the tablet of chemical material, so that the heating action itself acts as an attraction.

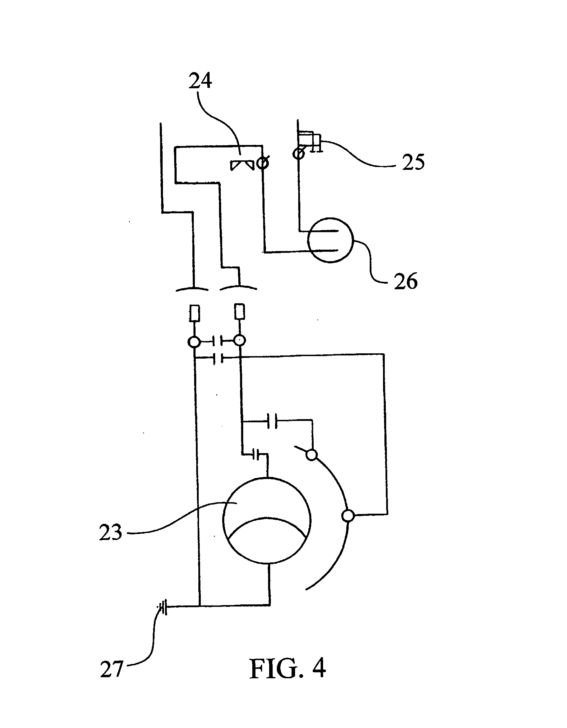

According to the simplified diagram of Figure 4, a suction motor of about 350 watts, 23, is fed by a circuit which includes a timer 24, a volumetric detector device 25 and a UV lamp 26, virtual earthing 27 likewise being observed.

## Claims

1. An insect suction apparatus (1), which comprises a body (2) carrying an insect-collecting bag (14), connected to a suction inlet (8), the suction action being effected through the inside of the apparatus by means of a motor-driven unit (15), the body of the apparatus supporting at the top a dome (4) carrying a light action and a chemical action attraction supports (16,17), capable of attracting the insects towards the entrance inlet subjected to the suction action for their collection in the inner bag **characterised in that** the bag is impregnated with insecticide and **in that** the light action support comprises a series of high luminosity LEDs (16), and **in that** it comprises a device for detecting the presence of insects and intended to activate the suction for a period of time which can be adjusted beforehand, said device having means for cancelling out the signals caused by the ambient conditions similar to the temperature of the light of the enclosure.

2. An insect suction apparatus according to claim 1, **characterised in that** the dome of the apparatus is joined to the upper base of the body thereof by means of supports in which are housed the cables for connection to the dome, which is opaque and provided on the inside with a compound of reflective material in the form of a prism to increase the luminosity.

3. An insect suction apparatus according to claim 1, **characterised in that** the attraction support carrying the tablet of chemical attraction material is equipped with a small resistance for the slow evaporation of said tablet and for generating the attraction heat.

4. An insect suction apparatus according to claim 1, **characterised in that** the body of the apparatus has at the top the suction inlet and an infrared detector device, and also preferably incorporates on its lateral surface an optical indicator for the filling of the bags, a time regulating control and a viewing window indicating the state of connection.

5. An insect suction apparatus according to claim 1, **characterised in that** the motor of the suction device is a rapid start motor controlled by a sudden start relay having a card with a consumption-reducing optocoupler and a diode for avoiding possible peaks and false sudden starts of the relay.

6. An insect suction apparatus according to claim 1, **characterised in that** it comprises an alignment of white LEDs inside the dome, covered by a prism-glass for producing the luminosity for attracting the insects.

7. An insect suction apparatus according to claim 6, **characterised in that** it has an inner reflective surface in the dome for reflecting the illumination of the LEDs.

8. An insect suction apparatus according to the preceding claims, **characterised in that** the pyroelectric infrared sensor combines a glass and a filter which produces an electrical change, exposed to infrared radiation, **for** cancelling out the signals caused by the ambient conditions similar to the temperature of the light of the enclosure.

9. An insect suction apparatus according to the preceding claims, **characterised in that** the supply circuit for the motor of the suction unit comprises a volumetric detector device and a system of LEDs which, with the action of a timer, are capable of setting the motor in operation.

## Patentansprüche

1. Insektensaugvorrichtung (1), die einen Körper (2) umfasst, der einen Insektensammelbeutel (14) trägt, der mit einem Saugeinlass (8) verbunden ist, wobei die Saugwirkung durch den Innenraum der Vorrichtung mittels einer motorgetriebenen Einheit (15) erzielt wird, wobei der Körper der Vorrichtung an seiner Oberseite eine Haube (4) trägt, die einen durch Lichtwirkung und einen durch chemische Wirkung anziehend wirkenden Träger (16, 17) trägt, die die Insekten zu dem Einlass anziehen, der der Saugwirkung unterliegt, um sie in dem inneren Beutel zu sammeln, **dadurch gekennzeichnet, dass** der Beutel mit einem Insektizid imprägniert ist, dass der Lichtwirkungsträger eine Reihe von LEDs (16) mit hoher Helligkeit enthält und dass sie eine Vorrichtung zum Erfassen des Vorhandenseins von Insekten umfasst, die dazu vorgesehen ist, die Saugwirkung für eine Zeitdauer zu aktivieren, die im Voraus eingestellt werden kann, wobei die Vorrichtung Mittel besitzt, um die Signale, die durch Umgebungsbedingungen hervorgerufen werden, die zu der Temperatur des Lichts des Gehäuses ähnlich sind, auszugleichen.

2. Insektensaugvorrichtung nach Anspruch 1, **dadurch gekennzeichnet, dass** die Haube der Vorrichtung mit der oberen Basis des Körpers durch Träger verbunden ist, in denen die Kabel für die Verbindung mit der Haube untergebracht sind, die lichtundurchlässig ist und an der Innenseite mit einer Verbindung aus einem reflektierenden Material in Form eines Prismas versehen ist, um die Helligkeit zu erhöhen.

3. Insektensaugvorrichtung nach Anspruch 1, **dadurch gekennzeichnet, dass** der anziehende Träger, der die Tablette aus einem chemisch anziehenden Material trägt, mit einem kleinen Widerstand ausgerüstet ist, um die Tablette langsam zu verdampfen und um die Anziehungswäme zu erzeugen.

4. Insektensaugvorrichtung nach Anspruch 1, **dadurch gekennzeichnet, dass** der Körper der Vorrichtung an der Oberseite den Saugeinlass und eine Infrarotdetektorvorrichtung aufweist und außerdem vorzugsweise an seiner seitlichen Oberfläche eine optische Anzeige, die den Füllstand der Beutel angibt, eine Zeiteinstellsteuerung und ein Beobachtungsfenster, das den Verbindungszustand angibt, enthält.

5. Inselctensaugvorrichtung nach Anspruch 1, **dadurch gekennzeichnet, dass** der Motor der Saugvorrichtung ein Schnellstartmotor ist, der durch ein Sofortstartrelais gesteuert wird, das eine Karte mit einem verbrauclisreduzierenden Optokoppler und einer Diode zum Vermeiden möglicher Spitzen und falscher Schnellstarts des Relais besitzt.

6. Insektensaugvorrichtung nach Anspruch 1, **dadurch gekennzeichnet, dass** sie eine Anordnung aus weißen LEDs innerhalb der Haube umfasst, die durch ein Prismenglas abgedeckt ist, um die Helligkeit zu erzeugen, mit der die Insekten angezogen werden.

7. Insektensaugvorrichtung nach Anspruch 6, **dadurch gekennzeichnet, dass** sie in der Haube eine innere reflektierende Oberfläche besitzt, um das Licht der LEDs zu reflektieren.

8. Insektensaugvorrichtung nach den vorhergehenden Ansprüchen, **dadurch gekennzeichnet, dass** der pyroelektrische Infrarotsensor ein Glas und ein eine elektrische Änderung erzeugendes Filter kombiniert und Infrarotstrahlung ausgesetzt ist, um die durch die Umgebungsbedingungen hervorgerufenen Signale, die zu der Temperatur des Lichts des Gehäuses ähnlich sind, auszugleichen.

9. Insektensaugvorrichtung nach den vorhergehenden Ansprüchen, **dadurch gekennzeichnet, dass** die Versorgungsschaltung für den Motor der Saugeinheit eine volumetrische Detektorvorrichtung und ein System aus LEDs umfasst, die anhand der Wirkung eines Zeitgebers den Motor in Betrieb versetzen können.

## Revendications

1. Appareil d'aspiration pour les insectes (1) qui comprend un corps (2) supportant un sac de collecte pour insectes (14) raccordé à une entrée d'aspiration (8), l'action d'aspiration étant effectuée à travers la partie intérieure de l'appareil au moyen d'une unité entraînée par moteur (15), le corps de l'appareil supportant, au niveau de la partie supérieure, un dôme (4) supportant des supports d'attraction d'action lumineuse et d'action chimique (16, 17), capables d'attirer les insectes vers l'entrée soumise à l'action d'aspiration pour leur collecte dans le sac intérieur, **caractérisé en ce que** le sac est imprégné avec un insecticide et **en ce que** le support d'action lumineuse comprend une série de DEL à haute luminosité (16), et **en ce qu'**il comprend un dispositif pour détecter la présence d'insectes et prévu pour activer l'aspiration pendant une période qui peut être réglée auparavant, ledit dispositif possédant des moyens pour annuler les signaux entraînés par les conditions ambiantes similaires à la température de la lumière de l'enceinte.

2. Appareil d'aspiration pour les insectes selon la revendication 1, **caractérisé en ce que** le dôme de l'appareil est joint à la base supérieure du corps de celui-ci au moyen de supports dans lesquels sont logés les câbles pour connexion au dôme, qui est opaque et pourvu, sur la partie intérieure, d'un composé de matériau réfléchissant sous forme de prisme pour augmenter la luminosité.

3. Appareil d'aspiration pour les insectes selon la revendication 1, **caractérisé en ce que** le support d'attraction supportant la pastille de matériau d'attraction chimique est pourvu d'une faible résistance pour l'évaporation lente de ladite pastille et pour générer la chaleur d'attraction.

4. Appareil d'aspiration pour les insectes selon la revendication 1, **caractérisé en ce que** le corps de l'appareil possède, au niveau de la partie supérieure, l'entrée d'aspiration et un dispositif détecteur à infrarouge, et incorpore également de préférence, sur sa surface latérale, un indicateur optique pour le remplissage des sacs, une commande de régulation temporelle et une fenêtre de vision indiquant l'état de connexion.

5. Appareil d'aspiration pour les insectes selon la revendication 1, **caractérisé en ce que** le moteur du dispositif d'aspiration est un moteur à démarrage rapide commandé par un relais de démarrage soudain possédant une carte avec un opto-coupleur de réduction de consommation et une diode pour éviter de possibles pointes et faux démarrages soudains du relais.

6. Appareil d'aspiration pour les insectes selon la revendication 1, **caractérisé en ce qu'**il comprend un alignement de DEL blanches à l'intérieur du dôme, recouvert par un verre prismatique pour produire la luminosité pour attirer les insectes.

7. Appareil d'aspiration pour les insectes selon la revendication 6, **caractérisé en ce qu'**il possède une surface réfléchissante intérieure dans le dôme pour réfléchir l'illumination des DEL.

8. Appareil d'aspiration pour les insectes selon les revendications précédentes, **caractérisé en ce que** le capteur infrarouge pyroélectrique associe un verre et un filtre qui produisent un changement électrique, exposé au rayonnement infrarouge, pour annuler les signaux entraînés par les conditions ambiantes similaires à la température de la lumière de l'enceinte.

9. Appareil d'aspiration pour les insectes selon les revendications précédentes, **caractérisé en ce que** le circuit d'alimentation pour le moteur de l'unité d'aspiration comprend un dispositif détecteur volumétrique et un système de DEL qui, avec l'action d'une horloge, sont capables de mettre le moteur en fonctionnement.
